Europäisches Patentamt

European Patent Office

Office européen des brevets

(11) Publication number: **0 488 466 A1**

## EUROPEAN PATENT APPLICATION

(21) Application number: **91203067.3**

(22) Date of filing: **22.11.91**

(51) Int. Cl.5: **A01B 33/06**, A01B 33/16,
A01B 33/12

(30) Priority: **26.11.90 NL 9002567**

(43) Date of publication of application:
**03.06.92 Bulletin 92/23**

(84) Designated Contracting States:
**DE FR GB NL**

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman**
**Octrooibureau Van der Lely N.V. Weverskade**
**10 P.O. Box 26**
**NL-3155 ZG Maasland(NL)**

(54) **A soil cultivating machine.**

(57) A soil cultivating machine has a frame portion
(1) and a plurality of soil working members (3) which
are drivable about upwardly directed shafts (2). In
order to make the machine suitable for working firm
soils having a solid-material sublayer, a soil working
member (3) includes at least one spring tine (47, 55)
arranged approximately in the extension of the shaft
(2) of the soil working member.

Fig. 2

The present invention relates to a soil cultivating machine having a frame portion and one or a plurality of soil working members which are drivable about upwardly directed shafts. In order to make the machine suitable for working firm soils having a solid-material sublayer, the soil cultivating machine is characterized in that a soil working member includes at least one spring tine arranged approximately in the extension of the shaft of the soil working member. This spring tine can move particularly advantageously over this solid-material sublayer. The spring tine preferably has a length exceeding the length of at least one further tine of the soil working member. The invention therefore also relates to a soil cultivating machine having a frame portion and one or a plurality of soil working members which are drivable about upwardly directed shafts, characterized in that a soil working member includes at least one tine arranged approximately in the extension of the shaft of the soil working member and having a length exceeding the length of at least one further tine of the soil working member. The tine arranged in the extension of the shaft of a soil working member preferably has a width larger than twice the thickness of the tine. The invention therefore also relates to a soil cultivating machine having a frame portion and one or a plurality of soil working members which are drivable about upwardly directed shafts, characterized in that a soil working member includes at least one tine arranged approximately in the extension of the shaft of the soil working member and having a width more than twice the thickness of the tine. The tine provided in the extension of the shaft of the soil working member is preferably made of leaf spring steel.

In a first embodiment in accordance with the invention, the leaf spring steel tine is constituted by two interconnected leaf springs fitted to the bottom side of the carrier of a soil working member. Preferably, these leaf springs contact each other over more than half their length. The spring tine thus obtained may be connected to a soil working member having two further rigid tines which are provided diametrically relative to the shaft of the soil working member. This renders it possible to provide the soil working member of the prior art p.t.o. rotary harrows with a leaf spring steel tine provided in the extension of the shaft of the soil working member.

In a second embodiment in accordance with the invention, the leaf spring steel tine is formed by two interconnected leaf springs which are connected near the lower side of the shaft of the soil working member to this shaft. The leaf springs are preferably arranged remote from and parallel to one another against two straight faces at the lower end of the shaft of a soil working member. In this embodiment, the leaf springs are preferably connected to the shaft of the soil working member by means of collar-like supporting plates provided over the leaf springs and a portion of the shaft of a soil working member, and a bolt joint. This construction renders it possible to secure the leaf springs with the aid of only one bolt and nut immovably relative to the further soil working members. In this embodiment, each individual leaf spring preferably has a width exceeding three times their thickness.

In yet another embodiment in accordance with the invention, the soil working member comprises at least one spring tine, one end of which is secured to the shaft of the soil working member. The invention then also relates to a soil cultivating machine having a frame portion and one or a plurality of soil working members which are drivable about upwardly directed shafts, characterized in that a soil working member comprises at least one spring tine, one end of which is connected to the shaft of the soil working member.

In yet a further embodiment in accordance with the invention, the soil working member comprises at least one round spring tine and at least one tine formed by one or a plurality of leaf springs. The invention then further relates also to a soil cultivating machine having a frame portion and one or a plurality of soil working members which are drivable about upwardly directed shafts, characterized in that a soil working member comprises at least one round spring tine and at least one or a plurality of leaf springs. One end of a round spring tine is preferably provided around the shaft of a soil working member. This end of the round spring tine may be locked in a slot in the shaft of the soil working member. If two round spring tines are present, then the relevant connection ends will be arranged in the opposite sense of rotation around the shaft of the soil working member. The free end of a round spring tine may extend both upwardly and downwardly, whereas, when two round spring tines are used, one tine may be directed upwardly and the other one downwardly. The round spring tines are preferably arranged with such a clearance around the shaft of a soil working member that, the soil cultivating machine being operative, the tines can move rearwardly under spring action in a direction opposite to the sense of rotation of the soil working member, that portion of the tines provided around the shaft of the soil working member then being drawn more tightly around this shaft. The round spring tines are preferably disposed on a shaft portion having a round cross-section, one end of which is provided with at least two straight, mutually parallel face portions for the connection of a leaf spring steel tine. This end may, of course, have a rectangular or square cross-section. A ring is preferably disposed between a round spring tine and the leaf spring steel tine around the shaft of the soil working member.

For a better understanding of the invention and to show how the same may be carried into effect, reference will now be made, by way of example, to the accompanying drawings, in which:

Figure 1 is a schematic plan view of a soil cultivating machine, in which the soil working members according to the invention are employed;

Figures 2 and 3 show a first embodiment of the soil working member in accordance with the invention, Figure 2 showing a cross-sectional view taken on the line II-II in Figure 1, and

Figures 4 and 5 show a second embodiment of the soil working member in accordance with the invention, in which Figure 5 shows a cross-sectional view taken on the line V-V in Figure 4.

The invention is not limited to the embodiments shown here; they only serve as an illustration of the invention. The invention furthermore relates to all the details shown in the said drawings, whether they have been described or not.

The implement shown in the drawings relates to a soil cultivating machine, more specifically a machine for preparing a seed bed. The machine includes a box-like frame portion 1 which extends transversely to the direction of operative travel A and is at least substantially horizontal. In the box-like frame portion 1 there are supported at equal interspaces of approximately 25 cms the upwardly directed, preferably vertical shafts 2 of soil working members 3. The ends of the box-like frame portion 1 are closed by means of plates 4 which extend at least substantially parallel to the direction of operative travel A of the machine. Near their leading sides, each of the plates 4 is provided with a transverse pin 5, the arrangement being such that the longitudinal centre lines of the transverse pins are in alignment. Around each of the pins 5 there is arranged freely pivotably an arm 6, which arm extends rearwardly along the inner side of a plate 4. Each arm 6 can be adjusted to and locked in a plurality of positions by means of an adjusting device 7, which is constituted by a threaded spindle arranged near the rear side of the box-like frame portion 1. Near their rear sides, each of the arms 6 is provided with a support 8 which extends obliquely downwardly and rearwardly. Between the supports 8 there is arranged freely rotatably a roller 9 by means of shafts 10 and bearings accommodated in bearing houses. The roller 9 constitutes a packer roller and includes in a customary manner a cylindrical carrier 11 on which crowns of cams are disposed at equal interspaces. In known manner, between these crowns of cams, there are arranged at the rear side scraper members which are connected to a tubular carrier 12 which is provided between the ends of supports 13 connected to the rear side of the arms 6. Side plates 14 which are adapted such that they can move laterally and upwardly around shafts 15 are mounted on either side of the box-like frame portion 1.

Inside the box-like frame portion 1, each shaft 2 is fitted with a cylindrical gear wheel 16, the arrangement being such that the gear wheels 16 on the shafts 2 of adjacent soil working members 3 are in driving connection with each other. Near the centre of the frame portion 1, the shaft of a soil working member 3 is extended and by means of this extended portion reaches into a gear box 17, in which the shaft is in driving connection by means of a bevel gear transmission with a shaft which extends in the direction of operative travel A and, via a speed variator located at the rear side of the gear box 17, is in driving connection with a superjacent shaft 19. In a plan view, the shaft 19 is located in the midway point of the box-like frame portion 1 and extends in the direction of operative travel A. At the leading side, the shaft 19 projects from the gear box 17 and can be connected to the power take-off shaft of a tractor via an intermediate shaft. Near the leading side, the box-like frame portion 1 is provided with a trestle 20 which includes a three-point lifting hitch for coupling to the three-point lifting arrangement of a tractor.

The upwardly directed shafts 2 supported in the box-like frame portion 1 are provided near the midway point with a shoulder 21, around which a ball bearing 22 is accommodated. This ball bearing 22 is accommodated in a housing 23 which rests in a recessed portion at the bottom side of the box-like frame portion 1. The housing 23 extends for some distance to within the box-like frame portion 1 and at its upper side has an edge 24 which is slightly folded inwardly and on which the ball bearing 22 bears. At the bottom side, the ball bearing 22 bears on a spring ring 25 fitted inside the housing 23. In addition, the shaft 2 is surrounded by a bushing 26 which bears on the bottom side of the ball bearing 22 and against which a retaining ring 27 is located which is accommodated inside the housing 23 and seals the bottom side of the housing 23. By means of a flange 28 connected to the housing 23 and located at least substantially near the midway point, the housing 23 can be bolted to the bottom side of the box-like frame portion 1 with the aid of bolts 29 and an annular element 30 connected rigidly or not rigidly to the inner side of the box-like frame portion 1 connected to this box-like frame portion, the arrangement being such that the ball bearing 22 is at approximately the same height as the bottom plate of the box-like frame portion 1. The hub 31 of a gear wheel 16 bears on the ball bearing 22, this hub 31 extending as far as to the inwardly folded edge 24 of the housing 23, the arrangement being such that substantially no space is present therebetween. At its upper side, the hub 31 of the gear wheel 16 bears on a ring 32 which is located in a recess in the shaft 2. A sealing ring 33 is provided over the ring 32. Above this sealing ring 33 there is a ball bearing 24 which is accommodated in a housing 35. The housing 35 is constituted by a cover plate 16 provided with an edge 37 which encloses the ball bearing 34 and extends through some distance to within the box-like frame portion 1, more specifically such that the ball bearing 34 is at approximately the same height as the upper plate of the box-like frame portion 1. The housing 35 is furthermore provided with a flange 38. Using bolts 39 and an annular element 40, which on the inner side of the box-like frame portion 1 is connected rigidly or not rigidly to this box-like frame portion 1, the flange 38 can be secured to the upper side of the box-like frame portion 1. The annular elements 30 and 40 can optionally be welded or cemented, e.g. with Araldite, to the upper side of the bottom plate or to the bottom side of the upper plate, respectively, of the box-like frame portion 1.

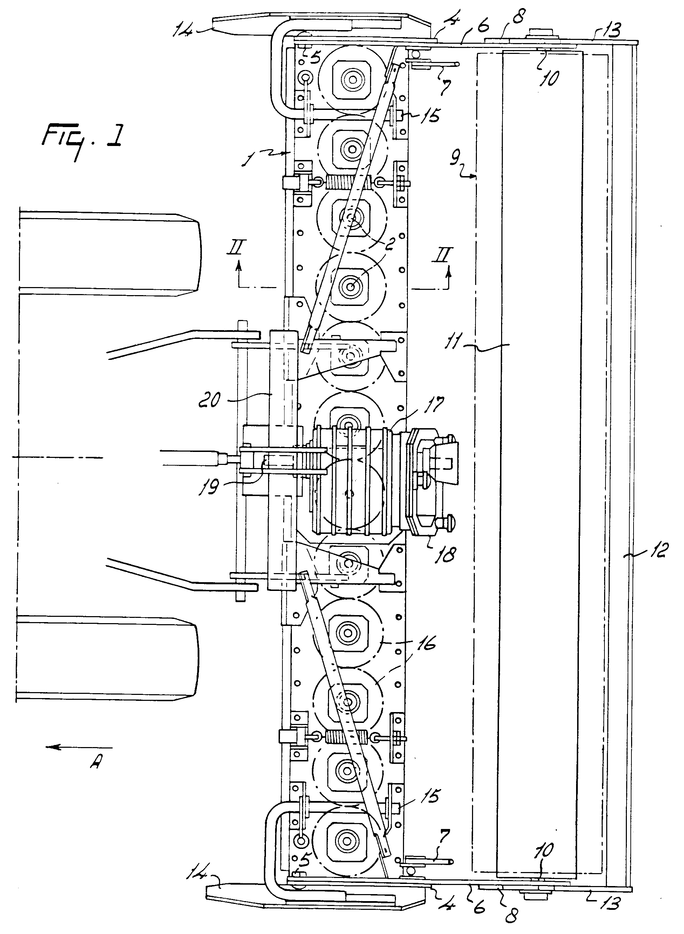

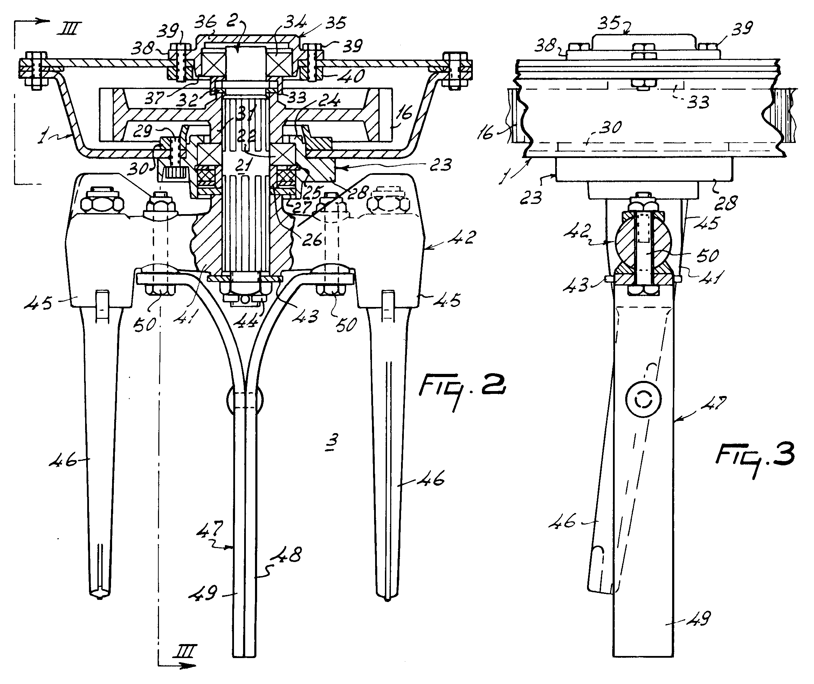

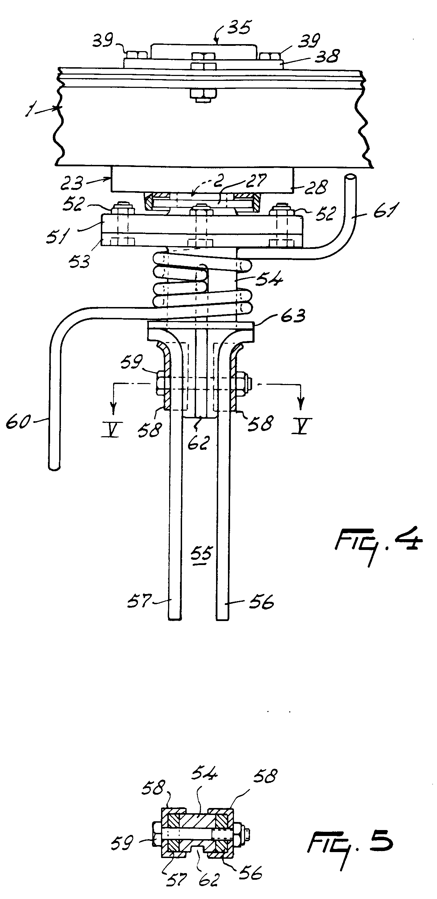

In the embodiment shown in Figures 2 and 3, the hub 41 of a carrier 42 is pushed onto that end of each shaft 7 that projects at the bottom side from the bearing housing 23 and is provided with splines. The hub 41 bears against the sealing ring 27 at the bottom side of the bearing housing 23. Arranged below the hub 41 is a sealing ring 43 which is kept in its position by means of a nut 44 turned on the threaded lower end of the shaft 2. The ends of the carrier 42 are provided with holders 45, in which the connecting members of tines 46 which extend at least substantially parallel to the shaft 2 are provided. The tines 46 have an operative portion which, relative to the direction of rotation of the soil working member, is adapted such that it drags along the soil during operation. In addition to the tines 46, there is a further spring tine 47 arranged approximately in the extension of the shaft 2 of the soil working member 3. The spring tine 47 has a length exceeding the length of the tines 46. The width of the tine 47 is more than twice the thickness of this tine. The tine 47 is made of leaf spring steel and is more particularly constituted by two leaf springs 48 and 49, which leaf springs contact each other for more than half their length and are bolted with the aid of bolts 50 to the bottom side of the carrier 42 of a soil working member 3. The relevant connecting points on the carrier 42 may be flattened, although, as is shown in Figures 2 and 3, it is alternatively possible to use rings adapted to the shape of the carrier.

In the embodiment shown in Figures 4 and 5, a plate-like element 51 is fitted to the bottom side of that portion of the shaft 2 of a soil working member 3 that projects from the bearing housing 23. Against this plate-like element 51 a second plate-like element 53 can be secured with the aid of bolts 52. Secured to this second plate-like element is a shaft portion 54 located in the extension of the shaft portion supported in the box-like frame portion 1. Instead of splitting the shaft 2 into two sections, as is shown in the present embodiment, the two plate-like elements 51 and 53 may alternatively be omitted and a shaft 2 consisting of one integral whole can be used. A dual-section shaft 2, however, simplifies replacing the soil working member 3. The upper portion of the shaft section 54 has a round cross-section, whilst the lower portion of this shaft section is provided with at least two straight, mutually parallel face portions, the cross-section of this lower portion of the shaft section 54 having a rectangular or square cross-section in a specific embodiment. At the lowermost portion of the shaft section 54 there is provided a spring tine 55 located substantially in the extension of the shaft 2 of the soil working member 3. Also this tine 55 is made of leaf spring steel. As is also the case for the tine 47, it also holds for the tine 55 that it has a width exceeding twice the thickness of the tine. The leaf spring steel tine 55 is constituted by two interconnected leaf springs 56 and 57 fitted to the lower side of the shaft section 54. These leaf springs 56 and 57 are arranged remote from and parallel to each other against two straight faces at the lower end of the shaft section 54. The leaf springs 56 and 57 are connected to the shaft section 54 by means of collar-like supporting plates 58 provided over the leaf springs 56, 57 and a portion of the shaft section 54, and a bolt with nut 59. The individual leaf springs 56 and 57 have a width which exceeds three times their thickness.

In addition to the leaf spring steel tine 55, the soil working member 3 of the embodiment shown in Figures 4 and 5 has two spring tines 60 and 61 which have a round cross-section. The outer ends of these two spring tines 60 and 61 extend helically around the uppermost portion of the shaft section 54. The shaft section 54 is provided with a slot 62, in which slot the end portion of that portion of the tines 60 and 61 that is provided helically around the shaft section 54 is locked. The free end of the round spring tine 60 extends downwardly, whereas the free end of the round spring tine 61 extends upwardly. The helical ends of the tines 60 and 61 are provided such around the uppermost portion of the shaft section 54 that they rotate in opposite directions, more specifically such that there is a clearance between the helical portion of the tines and the shaft section 54, as a result of which, in the operating state of the soil cultivating machine, the tines 60 and 61 can spring rearwardly against the rotary direction of the soil working member 3, that portion of the tines 60, 61 that encloses the shaft section 54 being drawn tighter around this section. As is also the case for the tines 46 in the first embodiment, also the tines 60 and 61 in this second embodiment are not arranged fully parallel to the shaft 2, but, relative to the direction of rotation of the soil working member 3, slope slightly rearwardly. A ring 63 is accommodated between the tines 60 and 55. Should one of the tines 60 or 61 need replacement, then the bolt 59 is to be loosened and removed, whereafter the leaf springs 56 and 57 and thereafter the ring 63 can be removed. By means of their outer ends located in the slot 62, the tines 60 and 61 can be moved downwardly through this slot and be removed. The positioning of a new tine 60 or 61 is effected by performing these actions in the reverse sequence.

## Claims

1. A soil cultivating machine having a frame portion (1) and one or a plurality of soil working members (3) which are drivable about upwardly directed shafts (2), characterized in that a soil working member (3) includes at least one spring tine (47, 55) arranged approximately in the extension of the shaft (2) of the soil working member (3).

2. A soil cultivating machine as claimed in claim 1, characterized in that the spring tine (47, 55) has a length exceeding the length of at least one further tine (46; 60, 61) of the soil working member (3).

3. A soil cultivating machine having a frame portion (1) and one or a plurality of soil working members (3) which are drivable about upwardly directed shafts, characterized in that a soil working member (3) includes at least one tine (47, 55) which is arranged approximately in the extension of the shaft (2) of the soil working member (3) and has a length exceeding the length of at least one further tine (46; 60, 61) of the soil working member (3).

4. A soil cultivating machine as claimed in any one of the preceding claims, characterized in that the tine (47, 55) provided in the extension of the shaft (2) of a soil working member (3) has a width exceeding twice the thickness of the tine (47, 55).

5. A soil cultivating machine as claimed in any one of the preceding claims, characterized in that the tine (47, 55) arranged in the extension of the shaft (2) of a soil working member (3) is made of leaf spring steel.

6. A soil cultivating machine as claimed in claim 5, characterized in that the leaf spring steel tine (47) is formed by two interconnected leaf springs (48, 49) which are fitted to the bottom side of the carrier (42) of a soil working member (3).

7. A soil cultivating machine as claimed in claim 6, characterized in that the leaf springs (48, 49) are fitted such that they contact each other over more than half their length.

8. A soil cultivating machine as claimed in any one of the preceding claims, characterized in that the spring tine (47) is connected to a soil working member (3) which includes two further rigid tines (46) which are arranged diametrically relative to the shaft (2) of the soil working member (3).

9. A soil cultivating machine as claimed in claim 5, characterized in that the leaf spring steel tine (55) is formed by two interconnected leaf springs (56, 57) which, near the bottom end of the shaft (2) of the soil working member (3) are connected to this shaft (2).

10. A soil cultivating machine as claimed in claim 9, characterized in that the leaf springs (56, 57) are arranged remote from and parallel to each other against two straight faces at the lower end of the shaft (2) of a soil working member (3).

11. A soil cultivating machine as claimed in claim 10, characterized in that the leaf springs (56, 57) are connected to the shaft (2) of the soil working member (3) by means of collar-like supporting plates (58) which are provided over the leaf springs (56, 57) and a portion of the shaft (2) of a soil working member (3), and a bolt joint (59).

12. A soil cultivating machine as claimed in any one of claims 9 to 11, characterized in that the individual leaf springs (56, 57) have a width exceeding three times their thickness.

13. A soil cultivating machine as claimed in any one of the preceding claims, characterized in that a soil working member (3) comprises at least one spring tine (60, 61), one end of which is fitted to the shaft (2) of the soil working member (3).

14. A soil cultivating machine as claimed in any one of the preceding claims, characterized in that a soil working member (3) comprises at least one round spring tine (60, 61) and at least one tine (55) formed from one or a plurality of leaf springs.

15. A soil cultivating machine as claimed in claim 13 or 14, characterized in that one end of the round spring tine (60, 61) is locked in a slot (62) in the shaft (2) of the soil working member (3).

16. A soil cultivating machine as claimed in any one of claims 13 to 15, characterized in that two round spring tines (60, 61) are provided whose relevant connecting ends are provided such that they rotate in opposite directions around the shaft (2) of the soil working member (3).

17. A soil cultivating machine as claimed in any one of claims 13 to 16, characterized in that the round spring tines (60, 61) are arranged around the shaft (2) of a soil working member (3) with such a clearance that the tines (60, 61), the soil cultivating machine being in the operative state, can spring downwardly against the direction of rotation of the soil working member (3), that portion of the tines (60, 61) that are arranged around the shaft (2) of the soil working member (3) being drawn tighter around this shaft.

FIG. 1

Fig.3

Fig.2

FIG. 4

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | NL-A-7 409 705 (VAN DER LELY N.V.) | 1-6,9, 12,13 | A01B33/06 A01B33/16 A01B33/12 |
| Y | * the whole document * | 14-17 | |
| Y | NL-A-7 409 854 (VAN DER LELY N.V.) * the whole document * | 14-17 | |
| X | US-A-2 622 498 (W.WHARTON) * column 3, line 11 - line 16; figure 1 * | 1-4 | |
| X | FR-A-930 376 (WHARTON & OLDING LTD) * page 2; figures 1,2,5,6 * | 1-3,14 | |
| A | NL-A-7 300 604 (VAN DER LELY N.V.) * page 8, line 4 - line 23; figure 8 * | 8,14 | |
| A | NL-A-7 604 567 (VAN DER LELY N.V.) | | |
| A | NL-A-8 902 017 (PATENT CONCERN N.V.) | | |

-----

**TECHNICAL FIELDS SEARCHED (Int. Cl.5 )**

A01B

The present search report has been drawn up for all claims

| Place of search | Date of completion of the search | Examiner |
|---|---|---|
| THE HAGUE | 18 FEBRUARY 1992 | WOHLRAPP R.G. |

EPO FORM 1503 03.82 (P0401)